(19) Europäisches Patentamt

European Patent Office

Office européen des brevets

(11) Veröffentlichungsnummer: **0 140 364**
**B1**

# (12) EUROPÄISCHE PATENTSCHRIFT

(45) Veröffentlichungstag der Patentschrift:
**09.03.88**

(21) Anmeldenummer: **84113041.2**

(22) Anmeldetag: **30.10.84**

(51) Int. Cl.⁴: **F 16 L 15/04, F 16 L 19/03**

(54) Schraubkupplung für Rohrstutzen mit Aussengewinde.

(30) Priorität: **02.11.83 DE 8331373 U**

(43) Veröffentlichungstag der Anmeldung:
**08.05.85 Patentblatt 85/19**

(45) Bekanntmachung des Hinweises auf die Patenterteilung:
**09.03.88 Patentblatt 88/10**

(84) Benannte Vertragsstaaten:
**AT CH FR GB IT LI**

(56) Entgegenhaltungen:
**DE - U - 7 115 019**
**FR - A - 2 450 401**
**US - A - 1 431 513**
**US - A - 2 457 633**
**US - A - 3 130 988**
**US - A - 3 338 597**

(73) Patentinhaber: **Schott Glaswerke,
Hattenbergstrasse 10, D-6500 Mainz (DE)**
Patentinhaber: **Carl-Zeiss-Stiftung trading as SCHOTT
GLASWERKE, Hattenbergstrasse 10,
D-6500 Mainz 1 (DE)**

(72) Erfinder: **Opper, Dietrich, Magdeburgerstrasse 28,
D-6507 Ingelheim (DE)**
Erfinder: **Wedel, Walter, Dipl.-Ing., Unterdorfstrasse 20,
D-6500 Mainz 1 (DE)**

(74) Vertreter: **Rasper, Joachim, Dr., Bierstadter Höhe 22,
D-6200 Wiesbaden (DE)**

## Beschreibung

Die vorliegende Erfindung betrifft eine verbesserte Schraubkupplung für Rohre und Rohrstutzen.

Derartige Schraubkupplungen sind bekannt. Sie bestehen aus zwei Schraubkappen mit Innengewinde und durchbohrtem Boden, die mit diesen Böden zueinandergekehrt angeordnet sind, und aus einer Hülse, welche durch diese Bohrungen der Schraubkappen hindurchreicht und an ihren beiden offenen Enden derart umbördelt ist, dass sie die Innenseiten der Böden der Schraubkappen umgreift, wodurch die beiden Schraubkappen um ihre Längsachse drehbar miteinander verbunden sind. Vorzugsweise weist diese Hülse an der Mitte ihrer Aussenwand eine umlaufende Wulst auf, die als Abstandhalter zwischen den beiden Schraubkappen dient.

Dank ihrer Anordnung und Bauweise sind die beiden Schraubkappen um ihre gemeinsame Achse unabhängig drehbar, und dadurch sind die beiden Rohrstutzen leicht voneinander lösbar.

Ein Nachteil dieser bekannten Schraubkupplung besteht jedoch darin, dass, da die Rohrenden im allgemeinen nicht plan und nicht exakt rechtwinklig zur Rohrlängsachse sind, derartige Verbindungen nicht dicht sind. Um ausreichende Dichtheit zu erzielen, müssten beide Rohrenden plan und genau rechtwinklig zur Rohrlängsachse geschliffen werden. Das ist ein wirtschaftlich kaum vertretbarer Aufwand.

Ziel der vorliegenden Erfindung ist daher eine Rohrkupplung der geschilderten Art, die die erforderliche Dichtigkeit aufweist, ohne dass die Rohrenden einem aufwendigen Schleifprozess unterzogen werden müssen.

Dieses Ziel wird gemäss der Erfindung dadurch erreicht, dass jeweils zwischen die Umbördelung der Hülse und die Innenseite des Bodens der Schraubkappe ein Ring aus elastischem Werkstoff gelegt ist.

Die Schraubkappen bestehen vorzugsweise aus Hartkunststoff, und die Hülse besteht vorzugsweise aus Polytetrafluoräthylen.

Der Ring, der Gegenstand der vorliegenden Erfindung ist, kann aus beliebigem geeignetem Material bestehen und ist vorzugsweise aus einem Elastomeren gefertigt; ein geeignetes Material ist beispielsweise Silikongummi.

Die Erfindung wird durch die Zeichnung näher erläutert. Es zeigen:

Fig. 1 einen Schnitt einer ersten Ausführungsform der Schraubkupplung gemäss der Erfindung.

Fig. 2 einen Schnitt einer zweiten Ausführungsform der Schraubkupplung gemäss der Erfindung.

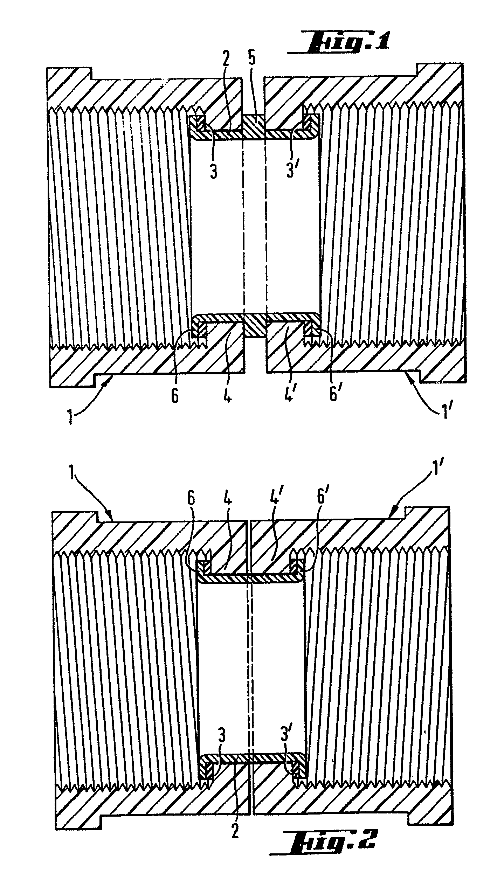

Die beiden Schraubkappen 1, 1′ sind durch die Hülse 2 miteinander verbunden, welche die Böden 4, 4′ der Schraubkappen innen umgreift (Umbördelung 6,6′); der Wulst 5 der Hülse 2 wirkt als Abstandhalter (Fig. 1).

Zwischen die Umbördelung 6, 6′ und die Innenseite des Bodens 4, 4′ ist jeweils ein Ring 3, 3′ aus Silikongummi gelegt. Fig. 2 unterscheidet sich von Fig. 1 dadurch, dass der Wulst 5 nicht vorhanden ist.

Die geschilderte Schraubkupplung findet in besonders vorteilhafter Weise Verwendung an Glasrohren und -apparaturen im Chemielaborbereich.

## Patentansprüche

1. Schraubkupplung für Rohrstutzen mit Aussengewinde, bestehend aus zwei Schraubkappen (1, 1′) mit Innengewinde und durchbohrtem Boden (4, 4′), die mit diesen Böden zueinandergekehrt angeordnet sind, und aus einer Hülse (2), welche durch diese Bohrungen der Schraubkappen hindurchreicht und an ihren beiden offenen Enden derart umbördelt ist, dass sie die Innenseiten der Böden der Schraubkappen umgreift, wodurch die beiden Schraubkappen um ihre Längsachse drehbar miteinander verbunden sind, dadurch gekennzeichnet, dass jeweils zwischen die Umbördelung (6, 6′) der Hülse (2) und die Innenseite des Bodens (4, 4′) der Schraubkappe (1, 1′) ein Ring (3, 3′) aus elastischem Werkstoff gelegt ist.

2. Schraubkupplung nach Anspruch 1, dadurch gekennzeichnet, dass diese Hülse (2) an der Mitte ihrer Aussenwand eine umlaufende Wulst (5) aufweist, die als Abstandhalter zwischen den beiden Schraubkappen dient.

## Claims

1. A screw coupling for pipe ends with external threads, comprising: two screw caps (1, 1′) with internal threads and bored-through bottoms (4, 4′) which are arranged with said bottoms facing each other, and a sleeve (2) which extends through the bores of said screw caps and which at its two open ends is beaded over in such a way that it grips around the inner sides of the bottoms of the screw caps, the two screw caps thereby being rotatably connected about their longitudinal axis, characterized in that a ring (3, 3′) each of elastic material is inserted respectively between the beaded portion (6, 6′) of the sleeve (2) and the inner side of the bottom (4, 4′) of the screw cap (1, 1′).

2. A screw coupling according to claim 1, characterized in that said sleeve (2) has, in the center of its outer wall, an encircling bead (5) which acts as a spacer between the two screw caps.

## Revendications

1. Raccord vissé pour tubulures à filetage extérieur, composé: de deux capuchons filetés (1, 1′) munis d'un filetage intérieur et d'un fond (4, 4′) percé d'un trou traversant, et qui sont disposés avec leurs fonds dirigés l'un vers l'autre, et d'une douille (2) qui traverse les trous des capuchons filetés et qui présente un bord rabattu à chacune de ses deux extrémités ouvertes de manière à recouvrir les faces internes des fonds des capuchons filetés, de sorte que les deux capuchons filetés sont reliés l'un à l'autre avec possibilité de rotation autour de l'axe longitudinal, caractérisé en ce qu'une bague (3, 3') en matière élastique est interposée entre le bord rabattu (6, 6') de la douille (2) et la face interne du fond (4, 4') du capuchon fileté (1, 1').

2. Raccord vissé selon la revendication 1, caractérisé en ce que la douille (2) présente, au milieu de sa paroi extérieure, un bourrelet circonférentiel (5) qui sert d'entretoise entre les deux capuchons filetés.

**Fig. 1**

**Fig. 2**